## Europäisches Patentamt

## European Patent Office

## Office européen des brevets

(19)

(11) Numéro de publication: **0 174 408**
**B1**

(12) # FASCICULE DE BREVET EUROPÉEN

(45) Date de publication du fascicule du brevet:
**29.03.89**

(21) Numéro de dépôt: **84401093.4**

(22) Date de dépôt: **28.05.84**

(51) Int. Cl.⁴: **G 01 C 19/30,** G 01 C 19/24,
H 02 N 1/00

(54) **Dispositif électronique de commande à charge constante d'un moteur capacitif, notamment pour appareil gyrométrique ou accélérométrique.**

(30) Priorité: **01.06.83 FR 8309066**

(43) Date de publication de la demande:
**19.03.86 Bulletin 86/12**

(45) Mention de la délivrance du brevet:
**29.03.89 Bulletin 89/13**

(84) Etats contractants désignés:
**BE DE GB IT NL SE**

(56) Documents cité:
**US-A-3 566 700**
**US-A-4 078 436**

(73) Titulaire: **SOCIETE DE FABRICATION D'INSTRUMENTS DE MESURE (S.F.I.M.), 13, avenue Marcel Ramolfo- Garnier, F-91301 Massy (FR)**

(72) Inventeur: **Audren, Jean- Thierry, 14, allée des Genêts, F-91940 Les Ulis (FR)**
Inventeur: **Pelletier, Charlie, 67, rue Jean Jaurès, F-91300 Massy (FR)**

(74) Mandataire: **Schrimpf, Robert, Cabinet Regimbeau 26, Avenue Kléber, F-75116 Paris (FR)**

LIBER, STOCKHOLM 1989

## Description

La présente invention concerne un dispositif électronique pour la commande d'un moteur capacitif.

Le terme "moteur capacitif" désignera par la suite tout dispositif comprenant deux électrodes mobiles l'une par rapport à l'autre et séparées par un entrefer de manière à constituer un condensateur, les électrodes de ce condensateur recevant des charges développant des forces électrostatiques d'attraction ou de répulsion entre les électrodes.

De tels moteurs capacitifs sont par exemple utilisés dans les dispositifs gyrométriques comme moteurs de précession pour exercer un couple de rappel sur une toupie pour ramener celle-ci vers sa position centrale. La toupie constitue par exemple une électrode mobile reliée à la masse, des électrodes fixes étant prévues au voisinage de la toupie pour exercer sur celle-ci, par effet électrostatique, des forces orientées convenablement de manière à exercer un couple de rappel. La charge reçue par les électrodes fixes est déterminée en fonction d'un signal de consigne de force (ou de couple) obtenu à partir d'un signal de position indiquant l'écart angulaire de la toupie par rapport à sa position centrale.

Un tel dispositif gyrométrique est par exemple décrit dans la demande française n° 83-05464, au nom de la demanderesse; les moteurs électrostatiques, outre leur rôle de moteurs de précession (application d'un couple de rappel à la toupie) jouent également un rôle de moteurs de sustentation (application d'une force axiale compensant le poids - et éventuellement l'accélération - de la toupie).

Jusqu'à présent, ces moteurs électrostatiques étaient commandés en les reliant, sous contrôle d'un asservissement, à une source de tension constante. Un tel mode de commande a cependant pour inconvénient de développer une force dont la valeur dépend de l'entrefer et n'est donc pas constante dans le temps (le déplacement de l'électrode mobile produisant une modification de l'entrefer et donc de la valeur de la capacité du condensateur). En effet, la force est donnée par l'expression

$$F = \frac{\varepsilon_0 S}{2e^2} \cdot V^2$$

V étant la tension appliquée entre les électrodes,
S la surface en regard des électrodes, et
e l'entrefer.

L'efficacité du moteur électrostatique n'est donc pas constante et dépend notamment de l'inclinaison de la toupie, dans le cas d'un moteur de précession pour gyromètre. En outre, il n'est généralement pas possible de mesurer directement la force appliquée, et le dispositif ne se prête pas par lui-même à la mesure directe de l'entrefer; il est donc nécessaire de prévoir des moyens annexes de détection de position pour mesurer cette valeur.

Pour remédier à ce dernier inconvénient, il a été proposé d'utiliser une source à courant constant, par exemple dans le FR-2 421 385 qui décrit un moteur électrostatique de rappel pour un accéléromètre à masse pendulaire. Dans ce cas, la valeur mesurée de la tension présente aux électrodes de rappel contient des informations relatives à la position de la masse pendulaire par rapport à sa position de repos.

Cependant, l'inconvénient de la non-linéarité de la force de rappel demeure.

L'invention propose de remédier à ces divers inconvénients grâce à une commande, non plus à tension ou intensité constante, mais à charge constante.

En effet, dans ce cas la force développée est donnée par l'expression:

$$F = \frac{Q^2}{2\varepsilon_0 S}$$

Q étant la charge accumulée dans le condensateur.

On remarquera que cette expression ne fait plus intervenir la valeur e de l'entrefer.

Plus précisément, le dispositif de l'invention comprend:
- une source de tension continue appliquée entre les électrodes du condensateur,
- des moyens de mesure du courant résultant vers le condensateur,
- des moyens intégrateurs du courant ainsi mesuré, pour délivrer un signal représentatif de la quantité d'électricité accumulée dans le condensateur,
- des moyens comparateurs, pour délivrer un signal d'écart entre ce signal représentatif de la quantité d'électricité et un signal de référence fonction du signal de consigne de force,
- des moyens d'asservissement, pour modifier la valeur de la tension continue délivrée par la source dans le sens de l'annulation du signal d'écart, de manière à conserver une quantité constante d'électricité accumulée dans le condensateur pendant toute la durée d'application de la tension continue, indépendamment des variations de capacité consécutives aux variations de l'entrefer.

De préférence, le dispositif comprend en outre des moyens de mesure de la tension appliquée par la source entre les électrodes du condensateur, pour délivrer un signal de mesure proportionnel à la valeur de l'entrefer du condensateur.

En effet, lorsqu'une charge est maintenue, la tension V présente aux bornes de l'électrode est donnée par

$$V = \frac{Q}{\varepsilon_0 S} \cdot e$$

La tension de commande V est directement proportionnelle à l'entrefer E et donc peut être utilisée comme signal de détection de position (angulaire ou linéaire) de l'électrode mobile.

Dans un mode de réalisation préférentiel, le condensateur est cycliquement chargé et déchargé, la charge étant réalisée par application de la tension continue de la source pendant une durée variable, la valeur de la tension ainsi appliquée résultant d'un signal de référence constant, et la durée d'application de cette tension étant déterminée, par des moyens de commande temporelle, en fonction du signal de consigne de force.

En effet, la charge de l'électrode n'est connue que par la mesure du courant de charge et son intégration. Compte tenu des fuites possibles, cette charge ne pourra être connue que pendant un court laps de temps. C'est pourquoi on préfère adopter une commande à charge constante en "tout ou rien", la modulation en fonction du signal de consigne de force étant réalisée en faisant varier la durée $T_M$ de maintien de la charge sur l'électrode. Si l'on désigne par T la période du cycle de charge/décharge, l'expression de la force est donnée par

$$F = (\tfrac{1}{\varepsilon \omega s} Q_0^2) \cdot \tfrac{T_M}{T}$$

$Q_0$ étant la valeur de la charge (constante) appliquée à l'électrode pendant la durée $T_M$.

La force est donc directement proportionnelle au taux de modulation du signal impulsionnel représentatif de la charge du condensateur. Cette caractéristique présente le double avantage de linéariser le facteur d'échelle et d'éviter une dérive à long terme, qui serait à craindre en cas d'application permanente d'une charge constante.

De préférence, la décharge du condensateur est réalisée par substitution au signal de référence constant d'un signal nul, l'instant de cette substitution étant déterminé par les moyens de commande temporelle.

De cette manière, la charge réelle accumulée dans le condensateur est une image du signal de référence qui a une forme impulsionnelle, d'abord constante puis nulle.

Il peut être avantageux d'éliminer les effets des régimes transitoires de décharge et de charge du condensateur pour éviter les erreurs de mesure et de commande qui pourraient résulter des temps de montée en charge et de décharge du condensateur.

D'autre part, le dispositif de l'invention comprend des moyens de confirmation de décharge, déclenchés par les moyens de commande temporelle, pour court-circuiter le condensateur avec un retard par rapport à l'instant de substitution au signal constant de référence d'un signal nul, la durée de ce retard étant sensiblement égale à la durée moyenne du régime transitoire de décharge du condensateur nécessaire au retour à ses bornes d'une tension nulle.

Il comprend également des moyens de mesure de la tension appliquée par la source entre les électrodes du condensateur, ces moyens de mesure restant inhibés, après le début de la période d'application de la tension de la source, pendant une durée sensiblement égale à la durée moyenne du régime transitoire de montée en charge du condensateur nécessaire à l'établissement sur ses armatures d'une charge constante.

On élimine ainsi l'incidence des flancs de montée et de descente de l'impulsion de charge dans le condensateur, pour procéder à la mesure de la tension (représentative de la valeur de l'entrefer) seulement lorsqu'un régime permanent est atteint, c'est-à-dire sur une impulsion parfaitement rectangulaire.

D'autres caractéristiques et avantages de l'invention apparaîtront à la lecture de la description détaillée ci-dessous, faite en référence aux figures annexées, sur lesquelles:

- la figure 1 est un schéma-bloc explicatif du fonctionnement du dispositif de l'invention,
- la figure 2 représente un mode de réalisation correspondant au schéma de la figure 1,
- la figure 3 montre une série de chronogrammes de différents signaux du dispositif,
- la figure 4 indique schématiquement les différents éléments du circuit de commande temporelle indiqué figure 1.

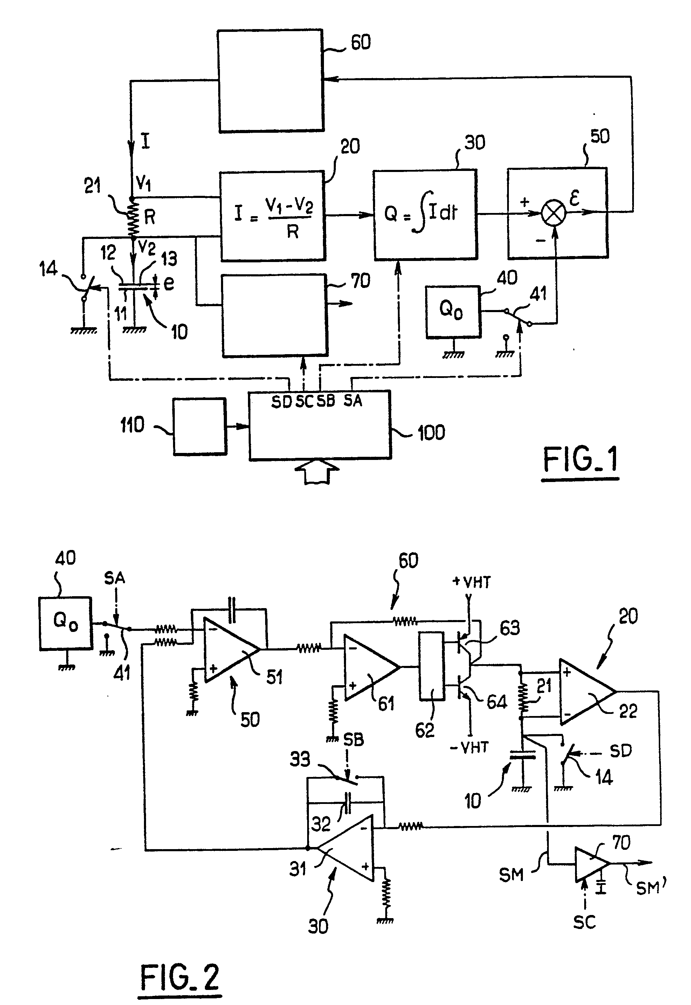

Sur la figure 1, le moteur électrostatique 10 comporte deux électrodes 11 et 12 séparées par un entrefer 13 de valeur e. L'électrode 11 est par exemple fixe et reliée à la masse; l'électrode 12 est alors une électrode mobile, à laquelle est appliquée une tension $V_2$ produite par une source 60.

Le courant I passant de la source 60 à l'électrode 12 est mesuré par un circuit 20, par exemple par mesure de la différence de potentiel $V_1 - V_2$ aux bornes d'une résistance série 21 de valeur R.

Le signal représentatif de l'intensité en sortie du circuit 20 est ensuite intégré par un circuit 30, de manière à déterminer la quantité d'électricité totale Q accumulée dans le condensateur sous l'effet de ce courant.

Cette valeur Q est ensuite comparée à une valeur de référence $Q_0$ constante, produite par un circuit de consigne de charge 40; cette comparaison est opérée dans un circuit 50 de manière à définir un signal d'écart pour asservir la source 60 dans le sens de l'annulation de cet écart.

De cette manière, la source est asservie de manière que la quantité d'électricité accumulée par le condensateur atteigne la valeur de référence $Q_0$ et soit maintenue à cette valeur.

Il est également prévu un circuit 70 de mesure de la tension atteinte, en régime permanent, aux bornes de la capacité, cette tension détectée permettant le calcul de l'entrefer e.

Un circuit 100 de commande temporelle, piloté par une horloge 110, produit une série de signaux SA, SB, SC et SD pour piloter le dispositif de la manière qui sera décrite par la suite, et notamment commander un interrupteur 14 de confirmation de décharge permettant de court circuiter périodiquement le condensateur, et un interrupteur 41 permettant de substituer à la valeur $Q_0$ de charge de référence une valeur nulle pour déclencher la décharge du condensateur.

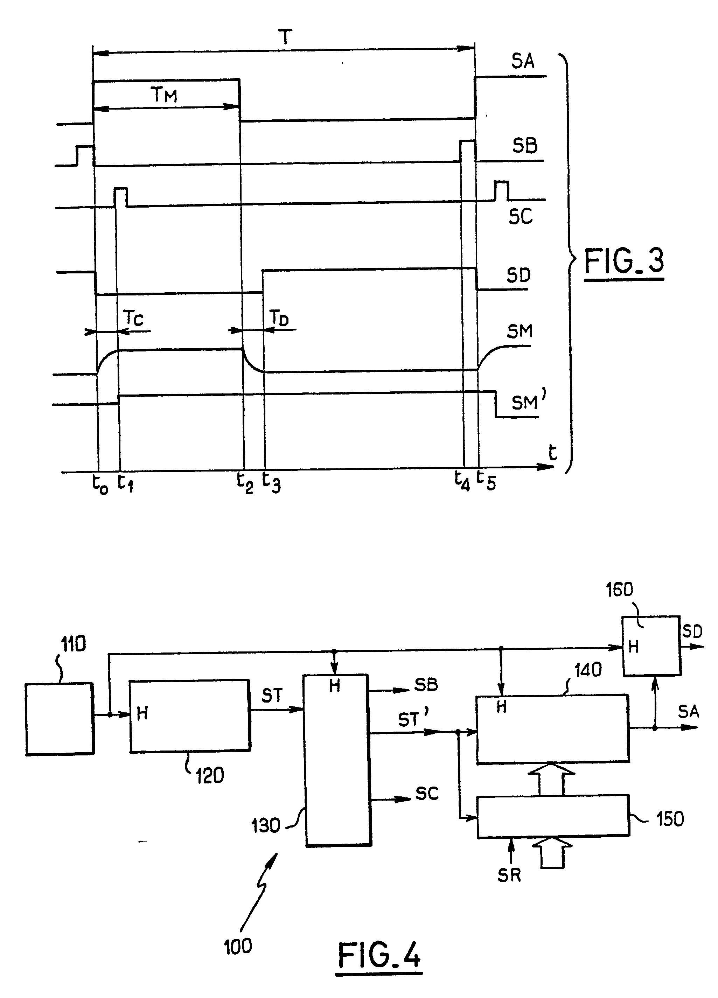

La figure 2 montre plus précisément un mode de réalisation de l'ensemble de la figure 1, à l'exception du circuit de commande temporelle 100 qui sera décrit par la suite figure 4. Le circuit de mesure de courant 20 comprend un amplificateur opérationnel 22 mesurant la tension aux bornes d'une résistance 21 en série avec le condensateur 10. Le signal de sortie de cet amplificateur alimente l'entrée inverseuse d'un amplificateur opérationnel 31 monté en intégrateur, formant le circuit 30 de détermination de charge. Le signal en sortie de cet intégrateur est ensuite dirigé vers un étage 50 d'annulation d'erreurs comprenant un amplificateur opérationnel 51 monté en intégrateur. Cet amplificateur reçoit également le signal de consigne de charge $Q_0$ produit par une source de tension stabilisée 40 et transmis à travers l'interrupteur 41.

Le signal en sortie de l'amplificateur 51 pilote un amplificateur haute tension 60 comprenant un amplificateur opérationnel 61 agissant sur un circuit de pilotage 62 d'une paire de transistors complémentaires 63, 64 reliée à des tensions symétriques + VHT et - VHT. La tension au point milieu des deux transistors 63, 64 sert à alimenter en tension le condensateur 10.

Outre le commutateur 41 précité d'annulation de la tension de référence de charge, commandé par un signal SA, il est également prévu un interrupteur 33 de remise à zéro de l'intégrateur 30 court-circuitant le condensateur 32 de cet étage, et commandé par un signal SB, ainsi qu'un interrupteur de confirmation de décharge court-circuitant les électrodes du moteur capacitif 10, par envoi d'une impulsion de commande 50.

En outre, le signal de mesure SM représentant la tension aux bornes du moteur capacitif 10 est mesuré par un échantillonneur-bloqueur 70, déclenché par un signal SC; le signal SM' est le signal de mesure délivré sous le contrôle de la porte de l'échantillonneur-bloqueur 70.

On décrira maintenant le fonctionnement de ce circuit, en référence notamment à la figure 3 qui représente les chronogrammes des différents signaux mentionnés sur la figure 2.

A l'instant $t_0$, le commutateur 41 (commandé par le signal SA) applique une tension constante représentative d'un signal de référence de charge $Q_0$ à l'entrée de l'intégrateur d'annulation d'erreur 51. L'interrupteur est maintenu dans cette position pendant une durée $T_M$, jusqu'à un instant $t_2$.

Il va en résulter une montée en charge du moteur capacitif (le signal SM représente la tension aux bornes de celui-ci), la charge de consigne étant atteinte à un instant $t_1$, après une durée $T_C$ correspondant à une période transitoire de montée en charge du condensateur, et donc à une période transitoire de fonctionnement de la contre-réaction de l'asservissement de la source.

A l'instant $t_2$, le commutateur 41 bascule, substituant ainsi à la consigne de charge $Q_0$ une consigne nulle.

La tension aux bornes du moteur capacitif va alors décroître jusqu'à atteindre une valeur nulle à un instant $t_3$, la durée $T_D$ correspondant à la constante de temps de décharge du condensateur et à une période transitoire de fonctionnement de la contre-réaction d'asservissement de la source.

La charge nulle étant ensuite maintenue jusqu'à un instant $t_5$, où le cycle recommence.

Peu avant l'instant $t_5$, un signal SB d'initialisation de l'intégrateur 30 est émis à l'instant $t_4$. Ce signal permet d'assurer la remise à zéro du circuit de calcul de charge pilotant l'asservissement de la source.

On remarquera par ailleurs que l'échantillonneur-bloqueur est déclenché par un signal SC émis à l'instant $t_1$, donc avec un léger retard par rapport à l'instant $t_0$, ce qui permet d'éliminer les effets de la montée en charge du condensateur (le signal résultant est représenté sur la ligne SM'; il est actualisé à l'instant $t_1$).

Enfin, on notera que le commutateur 14 de confirmation de décharge est commandé par un signal SD à l'instant $t_3$, donc avec un léger retard correspondant au temps de décharge du condensateur.

La figure 4 représente schématiquement l'organisation du circuit de commande temporelle 100, sous la commande d'une horloge 110 synchronisant le fonctionnement de ces différents éléments.

Ce circuit comporte tout d'abord un diviseur 120 alimenté par l'horloge et produisant un signal ST de période T alimentant un circuit 130 comportant un registre à décalage et une logique combinatoire pour produire les signaux SB et SC d'initialisation de l'intégrateur et de commande de l'échantillonneur-bloqueur, ainsi qu'un signal ST' permettant le chargement d'un circuit décompteur permettant la génération du signal SA sous la commande d'une mémoire verrouillée 150 contenant la valeur du taux de modulation définie en fonction du signal de consigne de force. Cette mémoire peut être périodiquement rafraîchie (signal SR de déverrouillage), notamment en cas de modification de la consigne de force. Le signal SD de confirmation de décharge est obtenu par décalage du signal SA dans un circuit 160.

**Revendications**

1. Un dispositif pour appliquer, en fonction d'un signal de consigne de force, une force à une électrode mobile d'un moteur capacitif (10) comprenant deux électrodes (11, 12) mobiles l'une par rapport à l'autre et séparées par un entrefer (13) de manière à constituer un condensateur, caractérisé en ce qu'il comprend:

- une source (60) de tension continue appliquée entre les électrodes du condensateur,
- des moyens (20) de mesure du courant résultant vers le condensateur,
- des moyens intégrateurs (30) du courant ainsi mesuré, pour délivrer un signal représentatif de la quantité d'électricité accumulée dans le condensateur,
- des moyens comparateurs, pour délivrer un signal d'écart entre ce signal représentatif de la quantité d'électricité et un signal de référence fonction du signal de consigne de force,
- des moyens d'asservissement (50), pour modifier la valeur de la tension continue délivrée par la source dans le sens de l'annulation du signal d'écart, de manière à conserver une quantité constante d'électricité accumulée dans le condensateur pendant toute la durée d'application de la tension continue, indépendamment des variations de capacité consécutives aux variations de l'entrefer.

2. Un dispositif selon la revendication 1, caractérisé en ce qu'il comprend en outre des moyens de mesure de la tension (70) appliquée par la source entre les électrodes du condensateur, pour délivrer un signal de mesure proportionnel à la valeur de l'entrefer du condensateur.

3. Un dispositif selon la revendication 1, caractérisé en ce que le condensateur est cycliquement chargé et déchargé, la charge étant réalisée par application de la tension continue de la source pendant une durée ($T_M$) variable, la valeur de la tension ainsi appliquée résultant d'un signal de référence constant ($Q_0$), et la durée d'application de cette tension étant déterminée, par des moyens de commande temporelle (100), en fonction du signal de consigne de force.

4. Un dispositif selon la revendication 3, caractérisé en ce que la décharge du condensateur est réalisée par substitution au signal de référence constant d'un signal nul, l'instant de cette substitution étant déterminé par les moyens de commande temporelle.

5. Un dispositif selon la revendication 4, caractérisé en ce qu'il comprend également des moyens de confirmation de décharge (14), déclenchés par les moyens de commande temporelle, pour court-circuiter le condensateur avec un retard par rapport à l'instant de substitution au signal constant de référence d'un signal nul, la durée de ce retard ($T_d$) étant sensiblement égale à la durée moyenne du régime transitoire de décharge du condensateur nécessaire au retour à ses bornes d'une tension nulle.

6. Un dispositif selon l'une des revendications 3 et 5, caractérisé en ce qu'il comprend également des moyens de mesure de la tension appliquée par la source entre les électrodes du condensateur, ces moyens de mesure restant inhibés, après le début de la période d'application de la tension de la source, pendant une durée ($T_c$) sensiblement égale à la durée moyenne du régime transitoire de montée en charge du condensateur nécessaire à l'établissement sur ses armatures d'une charge constante.

**Patentansprüche**

1. Vorrichtung zum Anwenden einer Kraft, abhängig von einem Soll-Kraftsignal, auf eine bewegliche Elektrode eines kapazitiven Motors (10) mit zwei in Bezug aufeinander beweglichen Elektroden (11, 12), welche durch einen Spalt (13) voneinander getrennt sind, so daß sie einen Kondensator bilden, dadurch gekennzeichnet, daß sie umfaßt:
- eine Quelle (60), um eine Gleichspannung zwischen den Elektroden des Kondensators anzulegen,
- Einrichtungen (20) zur Messung des resultierenden Stromes in Richtung auf den Kondensator,
- Integratoreinrichtungen (30) des so gemessenen Stromes, um ein Signal zu liefern, welches für die in dem Kondensator gespeicherte Elektrizitätsmenge repräsentativ ist,
- Komparatoreinrichtungen, um ein Signal der Abweichung zwischen diesem für die Elektrizitätsmenge repräsentativen Signal und einem von dem Soll-Kraftsignal abhängigen Bezugssignal zu liefern,
- Regeleinrichtungen (50) zum Modifizieren des Wertes der Gleichspannung, welche von der Quelle zur Löschung des Abweichungssignals geliefert wird, um eine in dem Kondensator gespeicherte konstante Elektrizitätsmenge während der ganzen Anwendungsdauer der Gleichspannung, unabhängig von den Kapazitätsänderungen infolge der Änderungen des Spalts, beizubehalten.

2. Vorrichtung nach Anspruch 1, dadurch gekennzeichnet, daß sie außerdem Einrichtungen (70) zur Messung der Spannung umfaßt, welche durch die Quelle zwischen den Elektroden des Kondensators angelegt wird, um ein Meßsignal zu liefern, das zu dem Wert des Spaltes des Kondensators proportional ist.

3. Vorrichtung nach Anspruch 1, dadurch gekennzeichnet, daß der Kondensator zyklisch ge- und entladen wird, wobei das Laden durch Anlegen der Gleichspannung von der Quelle während einer variablen Zeitdauer ($T_M$) erfolgt, der Wert der so angelegten Spannung aus einem konstanten Bezugssignal ($Q_0$) resultiert, und die Dauer der Anlegung dieser Spannung, abhängig von dem Soll-Kraftsignal, durch Zeitsteuereinrichtungen (100) bestimmt wird.

4. Vorrichtung nach Anspruch 3, dadurch gekennzeichnet, daß das Entladen des Kondensators dadurch erfolgt, daß das konstante Bezugssignal durch ein Null-Signal ersetzt wird, wobei der Augenblick des Ersetzens bestimmt wird durch die Zeitsteuereinrichtungen.

5. Vorrichtung nach Anspruch 4, dadurch gekennzeichnet, daß sie auch Einrichtungen (14) zur Bestätigung des Entladens umfaßt, welche durch die Zeitsteuereinrichtungen ausgelöst werden, um den Kondensator mit einer Verzögerung in Bezug auf den Moment des Ersetzens des konstanten Bezugssignals durch ein Null-Signal kurzzuschließen, wobei die Dauer dieser Verzögerung ($T_d$) im wesentlichen gleich der durchschnittlichen Dauer des Übergangszustandes des Entladens des Kondensators ist, die nötig ist, um an seinen Anschlüssen zur einer Null-Spannung zurückzukehren.

6. Vorrichtung nach einem der Ansprüche 3 und 5, dadurch gekennzeichnet, daß sie auch Einrichtungen zur Messung der Spannung umfaßt, die durch die Quelle zwischen den Elektroden des Kondensators angelegt wird, wobei diese Meßeinrichtungen, nach dem Beginn der Anwendungsperiode der Spannung der Quelle, während einer Dauer ($T_c$) gesperrt bleiben, die im wesentlichen gleich der durchschnittlichen Dauer des Übergangszustandes beim Aufladen des Kondensators ist, die nötig ist, um auf seinen Belegungen eine konstante Ladung herzustellen.

**Claims**

1. A device for applying, as a function of a force reference signal, a force to a movable electrode of an electrostatic motor (10) including first and second relatively movable electrodes (11, 12) with a gap (13) between said electrodes, in order to make a capacitor, characterized in that it comprises:
   - a source (50) of DC voltage applied between the electrodes of the capacitor;
   - measurement means (20) for measuring the resulting flow of current to the capacitor;
   - integrator means (30) for integrating the current thus measured to deliver a signal representative of the quantity of electricity stored in the capacitor;
   - comparator means for delivering an error signal representative of the difference between said signal representative of the quantity of electricity and a reference signal which is a function of the said force reference signal; and
   - servo-control means (50) for modifying the value of the DC voltage delivered by the said source of DC voltage in such a manner as to tend to cancel said error in order to maintain a constant quantity of electricity on the capacitor while said DC voltage is being applied thereto and regardless of any variations in the capacitance of the capacitor due to variations in the gap between its electrodes.

2. A device according to claim 1, characterized in that it further comprises means (70) for measuring the voltage applied by the source across the electrodes of the capacitor to deliver a signal proportional to the size of the gap between the capacitor electrodes.

3. A device according to claim 1, characterized in that the capacitor is cyclically charged and discharged, with charging being by applying the DC voltage from the source for a variable period ($T_M$), with the voltage thus applied resulting from a constant reference signal ($Q_0$), and the duration of the application of the voltage being determined by timing control means (100) as a function of the force reference signal.

4. A device according to claim 3, characterized in that the capacitor is discharged by substituting a zero signal for the constant reference signal, the instant of substitution being determined by the timing control means.

5. A device according to claim 4, characterized in that it further includes discharge-confirming means (14) triggered by the timing control means to short circuit the capacitor after a delay relative to the instant at which the zero signal is substituted for the constant reference signal, the duration of the delay ($T_d$) being substantially equal to the average transient period required by the capacitor to discharge until zero voltage appears across its terminals.

6. A device according to claim 3 or 5, characterized in that it further includes measurement means for measuring the voltage applied by the source across the electrodes of the capacitor, said measurement means remaining inhibited from the beginning of the period at which the source voltage is applied to the capacitor for a period ($T_c$) substantially equal to the average transient period required for a constant charge to be established on the capacitor electrodes.

FIG.1

FIG.2

1

EP 0 174 408 B1

$$\underline{FIG.3}$$

$$\underline{FIG.4}$$